# EUROPÄISCHE PATENTSCHRIFT

(11) **EP 3 546 211 B1**
(45) Veröffentlichungstag und Bekanntmachung des Hinweises auf die Patenterteilung: **17.03.2021**
(21) Anmeldenummer: 19164805.4
(22) Anmeldetag: 25.03.2019
(51) Int. Cl.: B32B 17/10, B60J 1/00

(54) **FAHRZEUGFENSTER UND VERFAHREN ZU DESSEN HERSTELLUNG**
VEHICLE WINDOW AND METHOD OF MANUFACTURING SAME
FENÊTRE DE VÉHICULE ET SON PROCÉDÉ DE FABRICATION

(30) Priorität: 26.03.2018 DE 102018107143
(43) Veröffentlichungstag der Anmeldung: 02.10.2019
(73) Patentinhaber: VOLKSWAGEN AKTIENGESELLSCHAFT, 38440 Wolfsburg (DE)
(72) Erfinder: Hacker, Roland, 38550 Isenbüttel (DE)
(74) Vertreter: Gulde & Partner

(56) Entgegenhaltungen:
- DE-A1- 1 771 236
- DE-A1- 1 771 252
- DE-A1- 2 657 459
- DE-T2- 68 903 924

## Beschreibung

Die Erfindung betrifft ein Fahrzeugfenster umfassend eine chemisch gehärtete Scheibe, sowie ein Verfahren zu deren Herstellung.

Die Stabilität von Fahrzeugscheiben ist insbesondere im Frontbereich eines Fahrzeugs für die Sicherheit der Passagiere wichtig.

Die ersten Autos hatten noch Frontscheiben aus herkömmlichem Glas. Beim Bruch derartiger Scheiben, beispielsweise Infolge eines Steinschlags oder Unfalls, entstehen große spitze und scharfe Scherben, welche zu erheblichen Verletzungen der Insassen führen können.

Seit 1909 ist durch den Chemiker Edouard Benedictus ein Verfahren zur Herstellung von Verbundglasscheiben bekannt. Zwei Glasscheiben werden dabei nacheinander mit einer Gelatine- und Cellulose-Schicht überzogen, dann mit einer Celluloidschicht in einem Spiritusbad zusammengelegt und zuletzt von einer hydraulischen Presse bei hohen Temperaturen miteinander verklebt. In den USA initiierte Henry Ford bereits zwischen 1919 und 1929 die Ausstattung aller Fahrzeuge mit den von Edouard Benedictus entwickelten Verbundscheiben.

In Europa hingegen bestanden Windschutzscheiben bis Ende der 1970er-Jahre aus Einscheibensicherheitsglas (ESG), Seitenscheiben werden bis heute daraus gefertigt. Bei diesem Glas handelt es sich um thermisch gehärtetes Glas.

Gegenüber normalem, unbehandeltem Glas hat es den Vorteil, dass es nicht in große Scherben zerbricht. Aber auch die kleinen Glasbruchstücke in die das ESG zerfällt, haben scharfe Kanten und können im schlimmsten Fall Augen und Haut verletzen.

Seit den 1980er-Jahren werden Neuwagen in Deutschland standardmäßig mit Frontscheiben aus Verbundglas ausgerüstet. Diese Scheiben bestehen aus drei Teilen. Das Verfahren ähnelt dem des Franzosen Benedictus noch heute. Anstelle von Gelatine und Cellulose wird eine durchsichtige, reißfeste Kunststofffolie mit der inneren und der äußeren Glasscheibe "verbacken". Die Folie verhindert, sogar bei einem Unfall, dass sich die Frontscheibe in Splitter auflöst und den Insassen entgegen kommt, da die Scherben daran kleben bleiben.

Alternativ oder zusätzlich werden die Scheiben beziehungsweise einzelne der Verbundscheiben thermisch gehärtet beziehungsweise thermisch vorgespannt.

Beim thermischen Vorspannen werden Gläser ab einer Dicke von 3 mm in einem Ofen auf ca. 600 °C erhitzt, um danach durch Anblasen mit kühler Luft rasch wieder auf Raumtemperatur gebracht zu werden. Durch die unterschiedlich schnelle Abkühlung des Materials von außen nach innen entstehen Zug- beziehungsweise Druckspannungen im Glas.

Durch diese Art der thermischen Behandlung wird das Material temperaturwechselbeständiger, druck- und schlagbeständiger und zerkrümelt, wenn es zerschlagen wird (Sicherheitsglas).

Derartige Gläser lösen jedoch nicht die Problematik des Entstehens von Steinschlägen, da die spröden Eigenschaften von Glas weiterhin bestehen. Schlägt ein Stein auf eine Scheibe, kann diese das nicht abfedern. Das Glas zerbricht an dieser Stelle. Durch diesen Bruch entstehen Spannungen in der Scheibe. Es reichen schon kleinere Belastungen aus, um die Risse immer weiter zu vergrößern. Fahrten über holprige Straßen zum Beispiel oder große Temperaturschwanken in der Scheibe können dazu führen, dass aus einem kleinen Steinschlag ein großer Riss wird.

Das Risiko der Zerstörung der Scheiben beziehungsweise der Verletzung infolge von Steinschlägen soll durch chemische Härtung der Oberseiten des Glases reduziert werden.

Hierbei wird eine ähnliche Verteilung von Zug- und Druckspannungen wie bei thermisch gehärtetem Glas erzielt. Beim chemischen Härten erfolgt durch einen lonenaustausch in der Glasoberfläche eine Spannungserhöhung beziehungsweise Vorspannung im oberflächennahen Bereich der Scheibe. Hierzu wird normal gekühltes Glas für mehrere Stunden in eine hochtemperierte (ca. 420 °C) Salzlösung beziehungsweise Salzschmelze getaucht. Dabei findet in der Glasoberfläche der gewünschte lonenaustausch statt. Dieser Effekt kann durch Anlegen einer Spannung erhöht werden. Großvolumige Salz-Ionen werden gegen kleinvolumige Glas-Ionen ausgetauscht, wodurch in der Oberfläche eine Druckspannung entsteht. Der Spannungsverlauf zeigt eine stärkere Steigung als bei thermisch vorgespanntem Sicherheitsglas. Interessant dabei ist, dass im Bereich bis 5 mm Glasstärke häufig höhere Biegezugspannungen erreicht werden können. Es gibt jedoch keinen Krümelbruch. Im Gegensatz zu thermisch gehärteten Gläsern weisen chemisch gehärtete Gläser eine höhere Flexibilität aus, da nur die Oberfläche gespannt ist und nicht die gesamte Scheibe. Zudem ist die behandelte Oberfläche besonders kratzfest. Aufgrund dieser Eigenschaften ist chemisch gehärtetes Glas besonders zur Prävention von Steinschlägen geeignet. Die (Kratz-)Festigkeit der Oberfläche geht proportional mit der Bruchfestigkeit des gesamten Glases einher und kann durch eine längere Verweildauer erhöht werden.

Eine erhöhte Festigkeit, die zur Prävention von Steinschlägen wünschenswert ist, geht jedoch auch mit einer erhöhten Verletzungsgefahr von Unfallopfern einher. Insbesondere Passanten, die von einem Auto erfasst werden, werden meist über die Motorhaube auf die Frontscheibe geschleudert, sodass der Kopf des Passanten auf der Frontscheibe aufschlägt. Je fester die Scheibe ist, desto größer ist die Kraft, die auf den Schädel wirkt, und desto größer auch die Unfallfolgen. Daher ist es auch wünschenswert, dass die Energie des Aufpralls frühzeitig in die Scheibe eingeleitet und durch Bruch der Scheibe absorbiert wird, um die Unfallfolgen zu reduzieren.

DE 1 771 236 A1 und DE 1 771 252 A1 offenbaren jeweils chemisch gehärtete Scheiben für Fahrzeugfenster bei denen zumindest ein Bereich der Scheibe ungehärtet ist. DE921882 und DE805773 offenbaren jeweils thermisch gespannte Scheiben bei denen zumindest ein Bereich der Scheibe ungehärtet ist.

Somit stehen sich die Aspekte Passantensicherheit und Insassensicherheit bezüglich der Anforderungen an die Frontscheibe eines Fahrzeugs gegenüber.

Der Erfindung liegt nun die Aufgabe zugrunde, ein Fahrzeugfenster bereitzustellen, das die Nachteile des Stands der Technik überwindet und insbesondere zur Ausbildung einer Frontscheibe geeignet ist, die den gegensätzlichen Ansprüchen von Passanten und Fahrzeuginsassen gleichermaßen Rechnung trägt.

Diese Aufgabe wird durch ein Fahrzeugfenster und ein Verfahren mit den Merkmalen des unabhängigen Anspruchs 1 gelöst. Somit betrifft die Erfindung ein Fahrzeugfenster umfassend eine chemisch gehärtete Scheibe. Es ist zumindest ein Bereich der Scheibe ungehärtet. Bei der Scheibe handelt es sich bevorzugt um eine Glasscheibe. Erfindungsgemäß ist vorgesehen, dass die Scheibe zusätzlich einen thermisch gespannten Bereich aufweist, in dem eine Brüchigkeit des Scheibenmaterials erhöht ist. Diese Ausgestaltungsform ermöglicht vorteilhafter Weise die Generierung von Sollbruchstellen entlang des thermisch gespannten Bereichs. Bevorzugt ist der thermisch gespannte Bereich in Form eines Bandes beziehungsweise entlang einer Linie ausgebildet. Dies hat den Vorteil, dass die Bruchstelle im Falle eines Unfalls sehr genau vorhersehbar ist. Mit besonderem Vorteil verläuft der thermisch gespannte Bereich entlang eines Randes des Sichtfeldes und/oder durch dieses hindurch.

Der Vorteil der erfindungsgemäßen Scheibe liegt darin, dass die Scheibenoberfläche in einem oder mehreren einzelnen Bereichen ungehärtet ist und dadurch keine

Oberflächendruckspannungen in diesen Bereichen aufweist. Im Falle eines Aufpralls eines Passanten auf die Scheibe neigen diese Bereiche eher zum Bruch, sodass die Aufprallenergie in die Scheibe eingeleitet wird und den Kopf des Passanten potentiell weniger schädigt. Gleichzeitig weist die Scheibe in den gehärteten Bereichen eine hohe Steinschlagresistenz auf. Die erfindungsgemäße Scheibe bietet demnach, insbesondere bei Verwendung in einem Fahrzeugfenster, einen ausgewogenen Kompromiss des Zielkonfliktes zwischen Passantensicherheit und Insassensicherheit.

Darüber hinaus ist die Verwendung von thermisch gehärtetem Glas in einer Windschutzscheibe keine Alternative zu chemisch gehärtetem Glas, da die im Falle eines Steinschlages entstehende Bruchstruktur erheblicher sichtbeeinträchtigend wirkt als eine heutige im Sichtbereich nicht gespannte Scheibe.

In bevorzugter Ausgestaltung der Erfindung ist vorgesehen, dass die Scheibe zwei Seitenflächen aufweist, wobei eine und/oder beide der Seitenflächen chemisch gehärtet sind.

Vorliegend ist die Scheibe als eine Glasscheibe oder als Verbundscheibe ausgebildet, wobei als Seitenfläche jeweils eine äußere Seitenfläche eines Glases zu verstehen ist. Insbesondere, wenn eine Oberfläche der Scheibe erfindungsgemäß gehärtet ist, die bei Verwendung in einem Fahrzeugfenster auf der vom Fahrzeuginnenraum abgewandten Seite angeordnet ist, besteht der Vorteil, dass die Scheibe stabiler gegenüber äußeren Einflüssen, wie beispielsweise Steinschlägen, Kratzern durch vertriebene Partikel, wie beispielsweise kleinste Steinchen oder Staub, ist. Eine Härtung der dem Fahrzeuginnenraum zugewandten Oberfläche hatte hingegen den Vorteil, dass die Scheibe an sich stabilisiert ist und eine größere Festigkeit aufweist als ungehärtete Scheiben, jedoch bei Passanteneinschlag zumindest einen Teil der Energie durch die ungehärtete Seite aufnimmt.

In weiterer bevorzugter Ausgestaltung wird die Scheibe als Frontscheibe in einem Fahrzeug angeordnet, wobei der ungehärtete Bereich im Sichtfeld der Frontscheibe angeordnet ist. Ergebnisse im Labor zur Crash-simulation zeigten, dass Passanten die infolge eines Unfalls auf das Auto geschleudert werden, mit großer Wahrscheinlichkeit mit dem Kopf im Sichtfeld der Frontscheibe auftreffen. Somit ist zur Erhöhung der Passantensicherheit bevorzugt, dass die Scheibe im Bereich des Sichtfeldes schneller nachgibt.

Nachteilig ist jedoch, dass dann in diesen Bereichen eine Steinschlagresistenz reduziert ist. Jedoch ist insbesondere im Sichtfeld eine Steinschlagresistenz aus Sicht der Insassensicherheit zu erhöhen, da Steinschläge im Sichtfeld zum einen das Sichtfeld einschränken.

Diese Nachteile werden durch eine weiter bevorzugte Ausführungsform der erfindungsgemäßen Scheibe gelöst. Mit besonderem Vorteil ist in dieser Ausführungsform vorgesehen, dass die Scheibe mehrere, insbesondere inselartig angeordnete, ungehärtete Bereiche umfasst. Mit anderen Worten weist die Scheibe nicht nur einen großen ungehärteten Bereich, sondern eine Vielzahl kleiner ungehärteter Bereiche auf. Diese ungehärteten Bereiche sind vorzugsweise gleichmäßig über die gesamte Scheibe, oder aber insbesondere im Bereich des Sichtfelds gleichmäßig, beziehungsweise alternativ in einem das Sichtfeld umgrenzenden Bereich, angeordnet. Die Verteilung der ungehärteten Bereiche ermöglicht zum einen, dass im Vergleich zu einer Fläche, die als ungehärteter Bereich ausgebildet ist die absolute Fläche des ungehärteten Bereiches, also die Summe der Gesamtzahl ungehärteter Teilbereiche, nicht reduziert wird aber dennoch die Wahrscheinlichkeit das Auftreten eines Steinschlag im ungehärteten Bereich deutlich reduziert ist. Somit ist einerseits sichergestellt, dass die Scheibe bei Aufprall eines Passanten im Sichtfeld beziehungsweise entlang eines das Sichtfeld umgrenzenden Randes bricht, andererseits ist sichergestellt, dass innerhalb des Sichtfeldes die Wahrscheinlichkeit des Auftretens von Steinschlägen reduziert ist. Mit anderen Worten sind Bereiche zwischen ungehärteten Bereichen der Scheibe gehärtet, sodass die Vorteile der ungehärteten Bereiche mit denen der gehärteten Bereiche kombiniert werden können.

Mit Vorteil ist, insbesondere in der vorgenannten Ausführungsform, ein ungehärteter Bereich nicht größer als 10 cm², insbesondere nicht größer als 7 cm², vorzugsweise nicht größer als 5 cm², besonders bevorzugt maximal 2,5 cm² groß. Es hat sich gezeigt, dass die Wahrscheinlichkeit des Auftretens eines Steinschlags in einem ungehärteten Bereich mit der vorgenannten Abstufung der Bereichsgröße immer weiter sinkt.

Das Herstellungsverfahren umfasst die folgenden Schritte. Zunächst wird eine Oberfläche einer zu härtenden Scheibe maskiert. Anschließend wird die maskierte Oberfläche mit einer Lösung zum chemischen Härten in Kontakt gebracht. Nach einer definierten Einwirkzeit, in der die Oberfläche des Glases durch die Einwirkung der chemischen Lösung gehärtet wird, wird die Lösung von der gehärteten Oberfläche wieder entfernt und anschließend die Maskierung von der gehärteten Oberfläche entfernt.

Unter Maskieren wird vorliegend das Aufbringen einer Schicht auf die Scheibenoberfläche verstanden, die eine lonendiffusion und damit einen lonenaustausch verhindert. Somit ist die Scheibenoberfläche im maskierten Bereich gegen die Härtung des Glases blockiert. Nach Entfernen der Maskierung entstehen direkt benachbarte Bereiche gehärteten und ungehärteten Glases.

In bevorzugter Ausgestaltung des Verfahrens ist vorgesehen, dass die Lösung zum chemischen Härten Kaliumnitrat umfasst. Kaliumnitratlösung ist besonders geeignet zum chemischen Härten, da die Kaliumionen in einem oberflächennahen Bereich der Scheibe die Gitterplätze von Natriumionen besetzen, wobei die Natriumionen in Lösung gehen. Da Kaliumionen einen größeren Durchmesser aufweisen als Natriumionen, kommt es zu einer Aufweitung des Kristallgitters. Da jedoch nur im oberflächennahen Bereich der beschriebene lonenaustausch stattfindet, ist der betreffende Bereich gegenüber angrenzenden Glasbereichen gespannt.

Bevorzugt ist die Maskierung, zumindest über eine Dauer von mehr als einer halben Stunde, in der Lösung zum chemischen Härten unlöslich. Dies stellt sicher, dass die maskierten Bereiche zumindest für eine vorbestimmte Zeit auf der Oberfläche der Scheibe verbleiben und ein Eindringen von Kaliumionen beziehungsweise ein lonenaustausch an der Glasoberfläche verhindert wird.

Mit besonderem Vorteil wird die Maskierung als organischer oder anorganischer Lack oder aber durch Haftung einer Polymerfolie auf der Oberfläche der Scheibe aufgebracht. Die Verwendung eines Lackes hat den Vorteil, dass mittels Rakelns, Tauchens, Druckens, Sprühens oder ähnlichem nahezu jede beliebige Form der Maskierung auf der Oberfläche aufgebracht werden kann. Die Entfernung des Lackes erfordert jedoch je nach Auswahl des Lackmaterials einen weiteren chemischen Schritt. Hier bietet die Verwendung der Polymerfolie einen Vorteil, da sie besonders leicht, insbesondere vollständig, von der Oberfläche wieder entfernt werden kann. Die Polymerfolie ist beispielsweise selbstadhäsiv oder mittels Haftvermittler, beispielsweise einem Klebstoff, auf der Glasoberfläche aufgebracht. Alternativ kann die Haftung der Polymerfolie auf der Scheibenoberfläche durch einen Saugeffekt realisiert werden, der sich beispielsweise einstellt, wenn eine besonders glatte Polymeroberfläche auf einer glatten Glasoberfläche angeordnet wird und die zwischen den beiden glatten Flächen verbliebene Luft oder Flüssigkeit mittels einem geeigneten Werkzeug ausgestrichen wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Fahrzeugfensters in einer bevorzugten Ausgestaltung der Erfindung, und
- Figur 2: eine schematische Darstellung eines Ausschnitts aus einem Verfahren zur Herstellung des Fahrzeugfensters in einer bevorzugten Ausgestaltung der Erfindung.

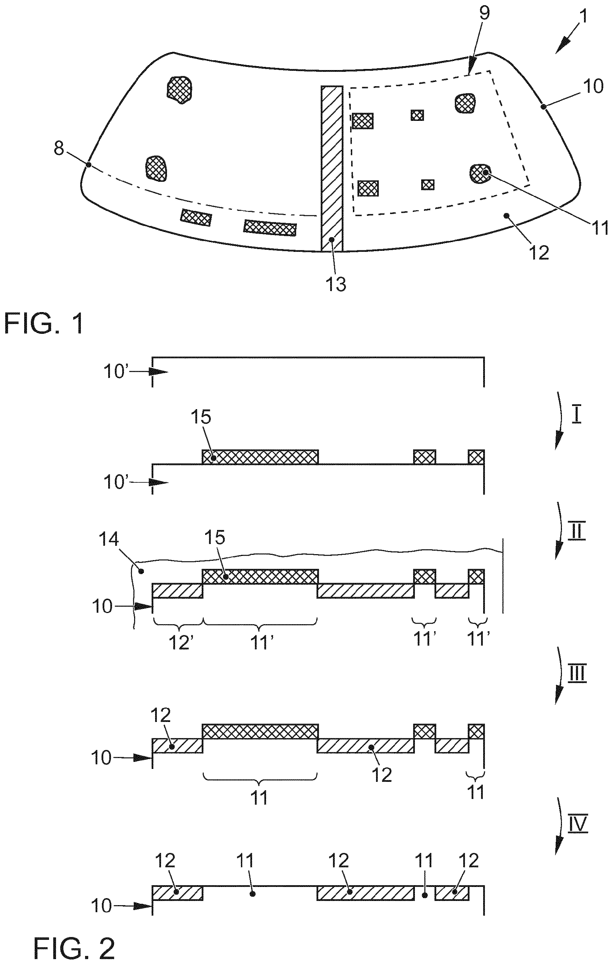

Figur 1 zeigt eine schematische Darstellung eines Fahrzeugfenster 1 in einer bevorzugten Ausgestaltung der Erfindung. Das Fahrzeugfenster 1 ist in der gezeigten Ausführungsform als Frontscheibe ausgebildet. Diese Frontscheibe umfasst eine Scheibe 10, die sowohl gehärtete Bereiche 12 als auch ungehärtete Bereiche 11 aufweist. Die ungehärteten Bereiche 11 sind in der gezeigten Ausführungsform inselartig über die Oberfläche der Frontscheibe 10 verteilt. Die Frontscheibe ist in Blickrichtung auf ein Fahrzeug (nicht dargestellt) gezeigt, das heißt,. in der gezeigten Darstellung säße der Fahrer eines Fahrzeugs mit dem erfindungsgemäßen Fahrzeugfenster 1 auf der rechten Seite, sodass ein Sichtfeld 9 des Fahrers ebenfalls auf der rechten Seite der Scheibe angeordnet ist.

Bevorzugt sind die ungehärteten Bereiche 11 möglichst klein, also mit einem Durchmesser von bis zu 10 cm², vorzugsweise bis zu 7 cm², besonders bevorzugt nicht mehr als 5 cm² beziehungsweise bis zu 2,5 cm², ausgebildet. Die ungehärteten Bereiche 11 können regelmäßig oder aber auch unregelmäßig über die Scheibe 10 verteilt sein. Vorteile bietet die Anordnung der ungehärteten Bereiche 11 im Bereich eines Wurfschattens 8 der Fronthaube eines Fahrzeugs. Im Bereich dieses Wurfschattens 8 ist die Wahrscheinlichkeit des Auftretens von Steinschlägen minimal. Ebenfalls vorteilhaft ist eine Vielzahl ungehärteter Bereiche 11 inselartig im Bereich des Sichtfelds 9 angeordnet. Eine Anordnung der ungehärteten Bereiche 11 entlang eines Randes des Sichtfelds 9 kann eine Sollbruchstelle im Bereich der Scheibe 10 generieren, wobei nun der Abstand benachbarter und gehärteter Bereiche 11 und damit die dazwischenliegenden gehärteten Bereiche 12 möglichst gering ist, um nun zum einen den Verlauf des Bruchs der Scheibe 10 antizipieren zu können und zum anderen die nötige Krafteinwirkung so gering wie möglich zu halten. Die Scheibe 10 weist einen thermisch vorgespannten Bereich 13 auf, beispielsweise in Form eines Bandes, wie in Figur 1 gezeigt. In diesem Bereich 13 ist die Brüchigkeit der Scheibe 10 im Vergleich zu den angrenzenden, insbesondere gehärteten Bereichen 12, stark heraufgesetzt, sodass im Falle einer Krafteinwirkung von außen auf die Scheibe 10 die Scheibe entlang des thermisch vor gespannten Bereiches 13 bricht.

In Figur 2 ist das erfindungsgemäße Verfahren zum Herstellen einer erfindungsgemäßen Scheibe schematisch dargestellt. Zunächst wird eine einfache Glasscheibe 10' bereitgestellt, welche in einem ersten Verfahrensschritt I auf der Oberfläche maskiert wird. Hierzu wird durch Auftragen einer chemischen Flüssigkeit beziehungsweise eines Lacks oder aber durch Anbringen einer Polymerfolie, eine Maskierungsschicht 15 auf der Oberfläche der unbehandelten Scheibe 10' aufgebracht.

In einem darauffolgenden Verfahrensschritt II wird die maskierte Oberfläche der Scheibe 10' mit einer Lösung 14 zum chemischen Härten in Kontakt gebracht. Dies kann beispielsweise durch Tauchen der Scheibe 10 in ein Lösungsmittelbad oder aber durch Besprühen der Oberfläche mit der chemischen Lösung 14 erfolgen. Während die Oberfläche der Scheibe 10' mit der Lösung 14 in Kontakt ist, erfolgt in den unmaskierten Bereichen 12' ein lonenaustausch, insbesondere von Natriumionen durch Kaliumionen, an der Oberfläche der Glasscheibe. Hierdurch bilden sich gehärtete Bereiche 12 aus. Die Maskierung 15 verhindert indes, dass die Lösung 14 in den maskierten Bereichen 11' mit der Glasoberfläche in Kontakt kommt. Somit wird ein lonenaustausch unterbunden und die maskierten Bereiche 11' bleiben ungehärtet. Die Maskierung 15 ist zumindest für eine Zeitdauer von einer halben Stunde, insbesondere zumindest für eine Zeitdauer von 2 Stunden, bevorzugt über die Zeitdauer der kompletten Einwirkzeit, in der Lösung 14 unlöslich. Löst sich die Maskierung 15 vor Ablauf der Einwirkzeit, werden die maskierten Bereiche 11' ebenfalls gehärtet, wobei die angrenzenden unmaskierten Bereiche 12' stärker gehärtet sind, da in diesen Bereichen mehr Natriumionen durch Kaliumionen ersetzt wurden.

Bei der Lösung 14 handelt es sich bevorzugt um eine Kaliumionen enthaltende Lösung. Besonders geeignet ist eine Kaliumnitratlösung.

Nach Ablauf einer definierten Einwirkzeit, die insbesondere im Bereich von einer halben Stunde bis 5 Stunden, vorzugsweise im Bereich von 3-4 Stunden liegt, wird die Lösung 14 im dritten Verfahrensschritt III von der Oberfläche entfernt.

Im Verfahrensschritt IV wird letztlich die Maskierung 15 durch Ablösen des Lacks beziehungsweise der Beschichtung beziehungsweise aber durch Abziehen der Polymerfolie entfernt.

### Bezugszeichenliste

- 1: Fahrzeugfenster

- 8: Wurfschatten
- 9: Sichtbereich
- 10: Scheibe
- 10': ungehärtete Glasscheibe
- 11: ungehärteter Bereich
- 11': maskierter Bereich
- 12: gehärteter Bereich
- 12': unmaskierter Bereich
- 13: Sollbruchstelle
- 14: chemische Lösung zum Härten von Glas
- 15: Maskierung

## Patentansprüche

1. Fahrzeugfenster (1) umfassend eine chemisch gehärtete Scheibe (10), wobei zumindest ein Bereich (11) der Scheibe (10) ungehärtet ist, **dadurch gekennzeichnet, dass** die Scheibe (10) zudem einen thermisch gespannten Bereich (13) aufweist, in dem eine Brüchigkeit des Scheibenmaterials erhöht ist.

2. Fahrzeugfenster (1) nach Anspruch 1, **dadurch gekennzeichnet, dass** die Scheibe (10) ein- oder beidseitig chemisch gehärtet ist.

3. Fahrzeugfenster (1) nach einem der vorhergehenden Ansprüche, **dadurch gekennzeichnet, dass** die Scheibe (10) eine Frontscheibe ist und der ungehärtete Bereich (11) im Sichtfeld (9) eines Fahrers eines die Frontscheibe aufweisenden Fahrzeuges angeordnet ist.

4. Fahrzeugfenster (1) nach einem der vorhergehenden Ansprüche, **dadurch gekennzeichnet, dass** die Scheibe (10) mehrere, insbesondere inselartig angeordnete, ungehärtete Bereiche (11) umfasst.

5. Fahrzeugfenster (1) nach Anspruch 4, **dadurch gekennzeichnet, dass** zumindest einer der ungehärteten Bereiche (11) nicht größer als 10 cm², insbesondere nicht größer als 5 cm², ist.

## Claims

1. A vehicle window (1), comprising a chemically tempered pane (10), wherein at least one region (11) of the pane (10) is untempered, **characterized in that** the pane (10) additionally has a thermally stressed region (13) in which a brittleness of the pane material is increased.

2. The vehicle window (1) according to claim 1, **characterized in that** the pane (10) is chemically tempered on one side or both sides.

3. A vehicle window (1) according to any one of the preceding claims, **characterized in that** the pane (10) is a windshield, and the untempered region (11) is arranged in the field of view (9) of a driver of a vehicle comprising the windshield.

4. A vehicle window (1) according to any one of the preceding claims, **characterized in that** the pane (10) comprises a plurality of untempered regions (11) which in particular are arranged in the manner of islands.

5. The vehicle window (1) according to claim 4, **characterized in that** at least one of the untempered regions (11) is not larger than 10 cm², in particular not larger than 5 cm².

## Revendications

1. Fenêtre (1) de véhicule comprenant une vitre (10) trempée chimiquement, au moins une zone (11) de la vitre (10) étant non trempée, **caractérisée en ce que** la vitre (10) présente en outre une zone (13) thermiquement tendue, dans laquelle la fragilité du matériau de la vitre est augmentée.

2. Fenêtre (1) de véhicule selon la revendication 1, **caractérisée en ce que** la vitre (10) est trempée chimiquement sur une ou sur les deux faces.

3. Fenêtre (1) de véhicule selon l'une quelconque des revendications précédentes, **caractérisée en ce que** la vitre (10) est un pare-brise et la zone (11) non trempée est agencée dans le champ de vision (9) d'un conducteur d'un véhicule présentant le pare-brise.

4. Fenêtre (1) de véhicule selon l'une quelconque des revendications précédentes, **caractérisée en ce que** la vitre (10) présente plusieurs zones (11) non trempées, en particulier disposées sous forme d'îlots.

5. Fenêtre (1) de véhicule selon la revendication 4, **caractérisée en ce que** au moins l'une des zones (11) non durcies n'est pas supérieure à 10 cm², en particulier pas supérieure à 5 cm².
